# EUROPEAN PATENT APPLICATION

(11) **EP 1 722 480 A1**
(43) Date of publication of application: **15.11.2006**
(21) Application number: 05710083.6
(22) Date of filing: 10.02.2005
(51) Int. Cl.: H04B 1/04, H04B 1/18, H04N 17/00

(54) **TRANSMITTER, RADIO COMMUNICATION SYSTEM, PROGRAM, COMPUTER-READABLE RECORDING MEDIUM WHERE PROGRAM IS RECORDED**

(30) Priority: 13.02.2004 JP 2004036880
(71) Applicant: SHARP KABUSHIKI KAISHA, Osaka-shi, Osaka-fu 545-0013 (JP)
(72) Inventor: TANAKA, Mitsunori, Chiba 272-0032 (JP)
(74) Representative: Müller, Frithjof E.
(86) International application number: PCT/JP2005/002031
(87) International publication number: WO 2005/078940

(57) **Abstract**

A worker uses a remote controller (80) to provide an instruction, so as to turn on signal output from a microcomputer (67) of a video transmitting unit (20) to be inspected to an antenna. For the video transmitting unit (20) and a display unit (30) paired with the video transmitting unit (20) in an inspection line, the worker selects an antenna to be inspected, with the use of the remote controller (80). In short, the worker selects an antenna to be functioned. At this time the worker selects at least one antenna in the video transmitting unit(20) and the display unit (30), so that communications capability of each antenna is found based on a combination of the antennas.

## Description

### TECHNICAL FIELD

The present invention relates to a wireless communications system in which a display process is performed by transmitting image data via wireless communications such as wireless LAN, and is particularly related to a wireless communications system which enables an inspection of communications capability with respect to a plurality of antennas. Further, the present invention also relates to: a transmitting device, a program, and a computer-readable storage medium each of which configures the wireless communications system.

### BACKGROUND ART

While transportable communications devices, such as liquid crystal television devices and CRT (Cathode Ray Tube) television devices, are suggested in recent years, there are suggested devices which transmit a video signal by using SS (Spread Spectrum) wireless method complying with IEEE802.11 or IEEE802.11b. Such wireless communications devices include not only a device which adopts the above wireless method, but also a device which adopts: (i) a wireless method for use in the next-generation mobile phone devices whereby acceleration of data transfer speed possible or PHSR (Personal Handy-Phone System); and/or (ii) Bluetooth^{®} wireless method.

Incidentally, these wireless methods requires an antenna. The length of an antenna element 12 in general for a frequency band of 2.4 GHz used in the SS wireless method and Bluetooth^{®} wireless method or the like is approximately 3 cm. This is equivalent to 1/4 of the wireless wave length.

Such an antenna includes a pair of main antenna elements each of which is perpendicular to each other (See Patent document 1: Japanese Unexamined Patent Publication No. 278903/1990 (Tokukaihei 2-278903; published on November 15, 1990)). By arranging each of the pair of antenna elements so that the antenna elements are perpendicular to each other, it is possible to ensure the gain in every direction, and to realize a reception capability to correspond to a change in polarized wave surface and direction of electric wave radiated from a transmitting member.

A transmitting device for receiving image data and transmitting the image data by using SS wireless method, and a display device for receiving the image data are subjected to the following inspection process prior to the shipment of these devices. Namely, while each member is housed, a predetermined video is transmitted from the transmitting device, and a displaying condition of the video displayed on the display device is checked to judge whether the devices are good or not.

However, while the inspection process is carried out, a plurality of transmitting devices and receiving devices are adjacently aligned in a production line. This may cause an interference due to the limited number of inspection-use channels. Consequently, a receiving device may receive an electric wave from a transmitting device other than the one which is paired with the receiving device. This problem may be solved by turning on the power only at the time of conducting the inspection. However, it is troublesome to turn on/off the main power of products every time transmission/reception test is conducted in the production line.

### DISCLOSURE OF INVENTION

In view of the foregoing problems, it is an object of the present invention to provide a transmitting device; a wireless communications system; a program and a computer-readable storage medium storing the program, each of which is capable of preventing interference from an adjacent identical product in an inspection process.

In order to solve the foregoing problem, a transmitting device of the present invention is a transmitting device which successively receives data, and which successively transmits the received data, including: transmitting means for performing data transmission via wireless communications; and control means for (i) prohibiting, when a first instruction is received, the data transmission of the received data performed by the transmitting means, and (ii) permitting, when a second instruction is received, the data transmission having been prohibited.

In the configuration, the data successively received is successively transmitted, by the transmitting means, to a reception side device via wireless communications. Further, when the control means receives the first signal, the control signal prohibits the data transmission of the received data. Further, when the control means receives the second signal, the control means permits the data transmission having been prohibited.

Thus, the following becomes possible in a case, such as an inspection process before the shipment, where transmitting devices having an identical configuration are closely placed to one another.

Firstly, by causing the control means of a transmitting device to prohibit data transmission from the transmitting device, in a case where another transmitting device is performing data transmission therefrom to a reception side device (another reception side device) paired with the other transmitting device, electric waves of the transmitting device and the another transmitting device are not interfered in the another reception side device.

Further, when the transmitting device performs data transmission to a reception side device paired with the transmitting device, the control means of the other transmitting device prohibits the data transmission from the other transmitting device, electric waves of the transmitting device and the another transmitting device are not interfered in the another reception side device. In this case, if the data transmission is prohibited in the transmitting device, the controlling means of the transmitting device permits the data transmission having been prohibited, so that the transmitting device is able to perform the data transmission.

Accordingly, it is possible to prevent data interference in the reception side device, which interference is attributed to interference of electric waves of video transmitting units.

Here, each reception side device may be provided for each transmitting device, or provided for each group of plural transmitting devices.

Further, a wireless communications system of the present invention is a wireless communications system comprising: said transmitting device set forth in any one of claims 1 to 4; and a receiving device for receiving the data transmitted from the transmitting device.

In the configuration, the wireless communications system includes the transmitting device and the receiving device for receiving data transmitted from the transmitting device.

Thus, it is possible to provide a wireless communications system which is capable of preventing data interference from another system in a receiving device, even in a case such as an inspection process before the shipment where plural wireless communications systems having an identical configuration are closely placed to one another.

Further, in order to solve the foregoing problem, a wireless communications system of the present invention is a wireless communications system having a pair of a transmitting device and a receiving device each having an antenna, said system comprising: operation means for enabling modification of various settings of said wireless communications system; and operation signal receiving means for receiving an operation signal which is an instruction from the operation means, wherein said operation means generates a switching operation signal for a purpose of switching a communications status of the antenna of at least one of said transmitting device and receiving device, between a communications-enabled status and a communications-disabled status, and said transmitting or receiving device includes control means for controlling the antenna to be the communications-enabled status or communications-disabled status, when the switching operation signal is received via the operation signal receiving means.

In the configuration, communications, during an inspection process, is enabled only between antennas of a transmitting device an a receiving device being inspected, and not between antennas of other transmitting device and the receiving device which are not being inspected. Accordingly, a control process, during the inspection process, is carried out by operating a predetermined key on a inspection-use remote controller or the like, instead of turning on/off the power switch (not shown) of the transmitting section of the transmitting device. Thus, it is possible to operate the inspection along with the other operations in the same line. At the same time, a transmission/ reception inspection is carried out while preventing interference from electric waves of other devices which are not being inspected. This improves working efficiency.

Further, in order to solve the problem, a program of the present invention is a program for causing a computer to function as the controlling means of the transmitting device.

Thus, users are able acquire the transmitting device by downloading the program to their computer systems.

Further, in order to achieve the problem, a storage medium of the present invention is a computer-readable storage medium storing the above-described program.

Thus, users are able acquire the transmitting device by downloading the program stored in the storage medium to their computer systems.

### BRIEF DESCRIPTION OF DRAWINGS

Fig. 1 is an embodiment of the present invention, and is a diagram illustrating a configuration of a wireless communications system.
Fig. 2(a) is a perspective view illustrating a configuration of an inverted L antenna.
Fig. 2(b) is a perspective view illustrating a configuration of an inverted F antenna.
Fig. 3 is an exploded view illustrating an example of a video transmitting unit.
Fig. 4 is a diagram illustrating an example of how a display unit is built.
Fig. 5 is a diagram illustrating blocks of the wireless communications system of the present invention.
Fig. 6 is an explanatory diagram illustrating a display screen of a display unit in an inspection process.
Fig. 7 is a timing chart illustrating when antennas of the video transmitting unit are functioning during the inspection process.

### BEST MODE FOR CARRYING OUT THE INVENTION

The following describes an embodiment of the present invention with reference to the drawings annexed hereto.

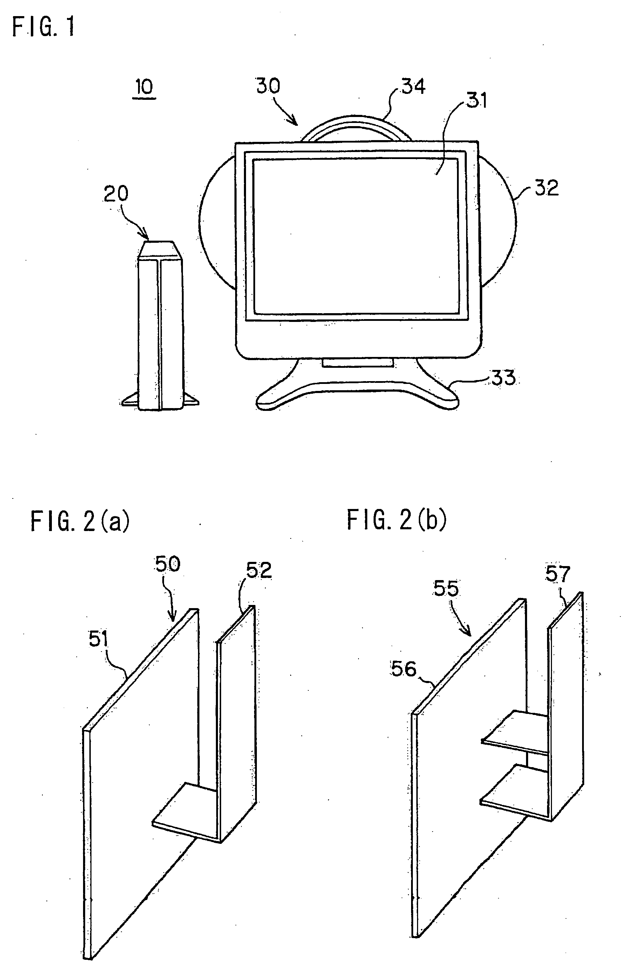

As illustrated in Fig. 1, the wireless communications system 10 of the present invention includes a combination of: (a) a video transmitting unit (transmitting device) 20 for receiving video data, and transmitting image data based on the received video data, by using SS wireless method; (b) a disposable display unit (receiving device) 30 for receiving the image data and displaying an image based on the received image data; and (c) a remote controller (operation means, remote control device) (not shown).

For example, the video transmitting unit 20 is preferably transmitting means which uses a carrier wave at a frequency band of several GHz order or more, so as to (i) receive CATV (Cable Television) signals and television electric waves, and (ii) transmit to the display unit 30 a relatively large quantity of video signals. Accordingly, for example, it is preferable that a communications method adopted be so-called SS (Spread Spectrum) wireless method such as direct diffusion (DS) method and Frequency Hopping (FH) method.

The display unit 30 mainly includes: a display screen section 31 configured by a liquid crystal panel; semicircular speaker storage sections 32 arranged on left and right sides of the display screen section 31; a stand 33; a video processing circuit (not shown); and a handle 34 for carrying the display unit 30. As described, the display screen section 31 includes the liquid crystal panel. However, the display screen section 31 is not particularly limited to this, as long as the display screen section 31 is configured by a member constituting a display element. It is particularly preferable to adopt a thin display element which is suitable for being carried around. Such a thin display element may be, for example, an organic/inorganic EL display element, an FED element, a plasma display element, or the like.

Each of these transmitting/receiving devices (video transmitting unit 20 and display unit 30) adopting SS wireless method includes: a circuit having transmitting means or the like, and a plurality of antennas or the like.

Next described is an antenna for use in each of the units 20 and 30.

Fig. 2 is a perspective view illustrating a configuration of the antenna. Fig. 2(a) illustrates an inverted L antenna, and Fig. 2(b) illustrates an inverted F antenna. The inverted L antenna 50 includes a rectangular antenna substrate 51, and an antenna element section 52 made of a metal plate whose side face is in the shape of an inverted "L". On the other hand, the inverted F antenna 55 includes a rectangular antenna substrate 56, and an antenna element section 57 made of a metal plate whose side face is in the shape of an inverted "F". It is not a concern which type of the antennas is used, however the inverted F antenna is used in the present embodiment.

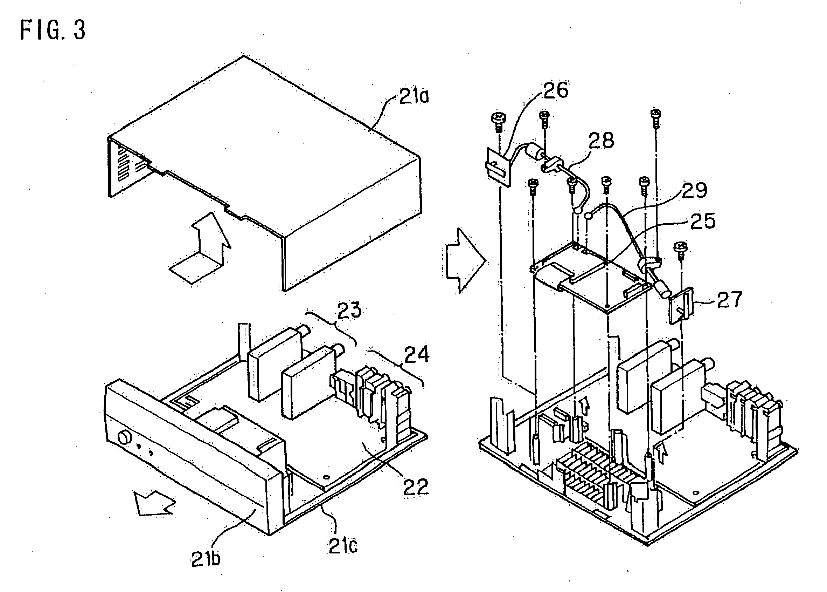

As illustrated in Fig. 3, the video transmitting unit 20 has a housing which includes a top face cover 21a and a front face panel 21b which are detachable, and a bottom face cover 21c. The housing houses therein a member such as a center substrate 22 having thereon a tuner section 23, video terminal 24, or the like. Further, as illustrated in Fig. 3, in the housing of the video transmitting unit 20, two antennas 26 and 27 are arranged so that the antennas 26 and 27 are orthogonal to each other. The antennas 26 and 27 are connected to a wireless communications transmitting section 25 via cables 28 and 29, respectively. Thus, the antennas are arranged in a direction perpendicular to each other, as is an arrangement of later-described antennas in the display unit 30, and as the result, the gain in every direction is ensured. In this way, it is possible to realize a reception capability which corresponds to a change in the polarization surface and direction of an electric wave radiated from the transmitting member used in wireless communications.

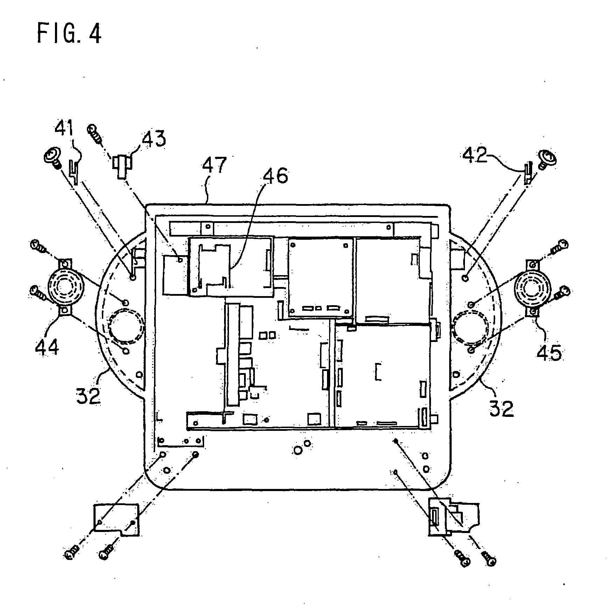

As illustrated in Fig. 4, each of antennas 41 to 43 is fixed on a front face cabinet 47 of the display unit 30 by using a screw, and is connected to a wireless communications receiving section 46 via a cable. The antenna 41 and 42 are respectively arranged above the speakers 44 and 45 in the speaker storage sections 32 so that the mounting directions of the antennas 41 and 42 differs from each other by 90°. The antenna 43 is arranged in the part where the display screen section 31 is stored so that the mounting direction of the antenna 43 differs from those of the antennas 41 and 42 by 90°. As described, the antennas 41 to 43 are arranged so that the respective directions of the antennas 41 to 43 are perpendicular to one another. This ensures the gain in every direction. Further, it is possible to realize a reception capability which corresponds to a change in polarized surface and direction of electric wave radiated from the transmitting member used in wireless communications.

Note that the antennas of the units 20 and 30 are arranged in perpendicular directions to one another. However, the present invention is not limited to this provided that the antennas are arranged in different directions. Further, the number of the antennas are not particularly limited, as long as the number of the antennas is not less than two.

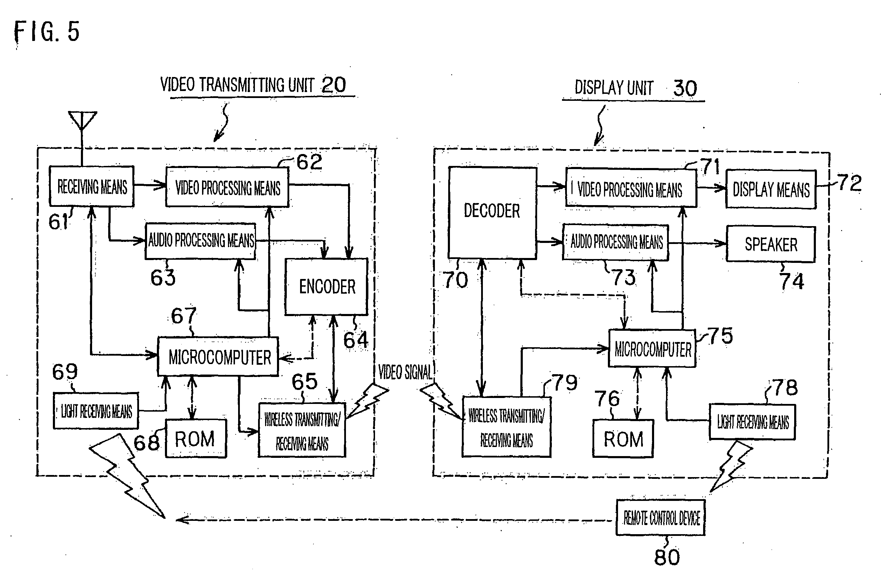

Fig. 5 is a functional block diagram of a wireless communications system of the present invention.

The video transmitting unit 20 generally includes: receiving means 61 for receiving a broadcast signal; video processing means 62 for processing a video signal in the broadcast signal having been received; audio processing means 63 for processing an audio signal in the broadcast signal having been received; an encoder 64 for compressing signals having been processed in the video processing means 62 and audio processing means 63; wireless transmitting/receiving means 65 for transmitting, to the display unit 30, signals having been compressed by the encoder 64; or the like. Note that the wireless transmitting/ receiving means 65 corresponds to transmitting means of the claims. Further, the wireless transmitting/ receiving means 65 includes the wireless communications transmitting section 25, the antennas 26 and 27, and the cables 28 and 29.

The display unit 30 generally includes: wireless transmitting/ receiving means 79 for receiving a video signal transmitted from the wireless transmitting/ receiving means 65 of the video transmitting unit 20; a decoder 70 for decompressing the video signal having been received by the wireless transmitting/receiving means 79; video processing means 71 for processing the video signal having been decompressed by the decoder 70; display means 72 for displaying video based on the video signal having been processed in the video processing means 71; audio processing means 73 for processing an audio signal having been decompressed by the decoder 70; a speaker 74 for outputting audio based on the audio signal having been processed by the audio processing means 73; a microcomputer (channel controlling means)75 and an ROM 76 each for controlling the display unit 30; light receiving means 78 for receiving a signal from a remote controller 80 for controlling the display unit 30. Note that the display screen section 31 is a part (screen part) of the display means 72.

In the video transmitting unit 20, a series of the following processes is mainly performed. Namely, the video processing means 62 performs a signal processing such as a process of removing a video carrier wave or the like from a broadcast signal having been received by the receiving means 61. Then, for the purpose of performing a resending process, the encoder 64 performs a video compressing process or the like, and the resulting signal is superimposed on a carrier frequency, which is set by the wireless transmitting/receiving means 65, and is transmitted to the display unit 30. In order to appropriately perform these processes, the video transmitting unit 20 is provided with the microcomputer 67, and the ROM (storage means) 68 for storing and retaining various setting values. It is possible to provide light receiving means 69 for receiving a control signal from a remote controller 80, for the purpose of modifying the setting values stored in the ROM 68 with an intermediary of the microcomputer 67. Alternatively, the following communications route may be also possible. Namely, the control signal from the remote controller 80 may be wirelessly communicated to the microcomputer 67, via the light receiving means 78, the microcomputer 75, the wireless transmitting/receiving means 79, and the wireless transmitting/receiving means 65. Note that the microcomputer 67 corresponds to control means of the claims. Further, the light receiving means 69 corresponds to operation signal receiving means of the claims.

Here, the following provides detailed explanations on the light receiving means 69, microcomputer 67, and wireless transmitting/receiving means 65 in the video transmitting unit 20.

The light receiving means 69 receives various signals from the remote controller 80, and transmits each of the received signals to the microcomputer 67.

The microcomputer 67 accepts the signal having been transmitted from the light receiving means 69. If the received signal is a signal (first instruction) which indicates that data transmission to the display unit 30 is prohibited, the microcomputer 67 transmits, to the wireless transmitting/receiving means 65, an instruction (hereinafter, transmission-side prohibition instruction) that transmission of data to the display unit 30 is prohibited.

The wireless transmitting/receiving means 65 receives the transmission-side prohibition instruction from the microcomputer 67. When the transmission-side prohibition instruction is received, the wireless transmitting/receiving means 65 prohibits the data transmission to the display unit 30. If the data transmission is in process, the data transmission is halt.

On the other hand, while the data transmission is prohibited as described above, if the microcomputer 67 receives, from the light receiving means 69, a signal (second instruction) indicating that the prohibited data transmission is permitted, the microcomputer 67 transmits, to the wireless transmitting/receiving means 65, an instruction (hereinafter, transmission-side permission instruction) that the prohibited data transmission is permitted.

The wireless transmitting/receiving means 65 receives the transmission-side permission instruction from the microcomputer 67. When the reception of the transmission-side permission instruction is received, the wireless transmitting/receiving means 65 starts the data transmission to the display unit 30. If the data transmission has been halt, then the data transmission is resumed.

In the display unit 30, a series of the following processes is performed. Namely, a signal transmitted from the wireless transmitting/receiving means 65 is received by the wireless transmitting/ receiving means 79, and the received signal is subjected to a processing such as removal of communications wave or the like. Then, a video decompression process or the like is performed in the decoder 70, and a video signal processing or the like is performed in the video processing means 71. Thus, a video is displayed on the display means 72. In order to appropriately perform these processes, the display unit 30 is provided with the microcomputer 75, and the ROM 76 for storing and retaining various setting values. Furthermore, the light receiving means 78 for receiving a predetermined signal from the remote controller 80 is provided as means for modifying, with an intermediary of the microcomputer 75, the setting values stored in the ROM 76, so that various controls are possible. Note that the microcomputer 75 corresponds to the control means of the claims. Further, the light receiving means 78 corresponds to the operation signal receiving means of the claims.

Here, the following provides detailed explanations on the light receiving means 78; the microcomputer 75; and wireless transmitting/receiving means 79 in the display unit 30.

The light receiving means 78 receives various signals from the remote controller 80, and transmits each of the received signals to the microcomputer 75.

The microcomputer 75 accepts the signal having been transmitted from the light receiving means 78. If the received signal is a signal indicating that reception of data is prohibited, the microcomputer 75 transmits, to the wireless transmitting/receiving means 79, an instruction (hereinafter, reception-side prohibition instruction) that the reception of data from the video transmitting unit 20 is prohibited.

The wireless transmitting/receiving means 79 receives the transmission-side prohibition instruction from the microcomputer 75. When the reception-side prohibition instruction is received, the wireless transmitting/ receiving means 79 prohibits the reception of data transmitted from the video transmitting unit 20. If the data reception is in process, the data reception is halt.

On the other hand, while the data reception is prohibited as described above, if the microcomputer 75 receives, from the light receiving means 78, a signal indicating that the prohibited data reception is permitted, the microcomputer 75 transmits, to the wireless transmitting/receiving means 79, an instruction (hereinafter, reception-side permission instruction) that the prohibited data reception is permitted.

The wireless transmitting/receiving means 79 receives the reception-side permission instruction from the microcomputer 75. When the reception of the reception-side permission instruction is received, the wireless transmitting/receiving means 79 starts the reception of data transmitted from the video transmitting unit 20. If the data reception has been halt, then the data reception is resumed.

Incidentally, the video transmitting unit 20 and the display unit 30 undergo an inspection process prior to the shipment. The following describes how communications capability of the antennas are inspected.

The power of all video transmitting units 20 and display units 30 are in the "ON"-state during the inspection process. Further, the antennas of the display units 30 are in operable state, while the functions of the antennas of the video transmitting units 20 are deactivated. That is, the microcomputer 75 of each of the display units 30 is able to receive a signal from the wireless transmitting/receiving means 79 having the antennas 41 to 43, while a signal output from the microcomputer 67 of each of the video transmitting unit 20 to the wireless transmitting/receiving means 65 having the antennas 26 and 27 is halt. Each of the microcomputers 67 and 75 is provided with a control function which is related to signal input/output with respect to the wireless transmitting/receiving means 65 and 79, and a worker is able to instruct the on/off of the signal input/output, with the use of the remote controller 80. In other words, the microcomputer 67 and 75 are provided with a function of controlling the signal input/output with respect to the wireless transmitting/ receiving means 65 and 79, and the above described reception and output of the signal are halt by the control function according to the instruction from the worker who operates the remote controller 80.

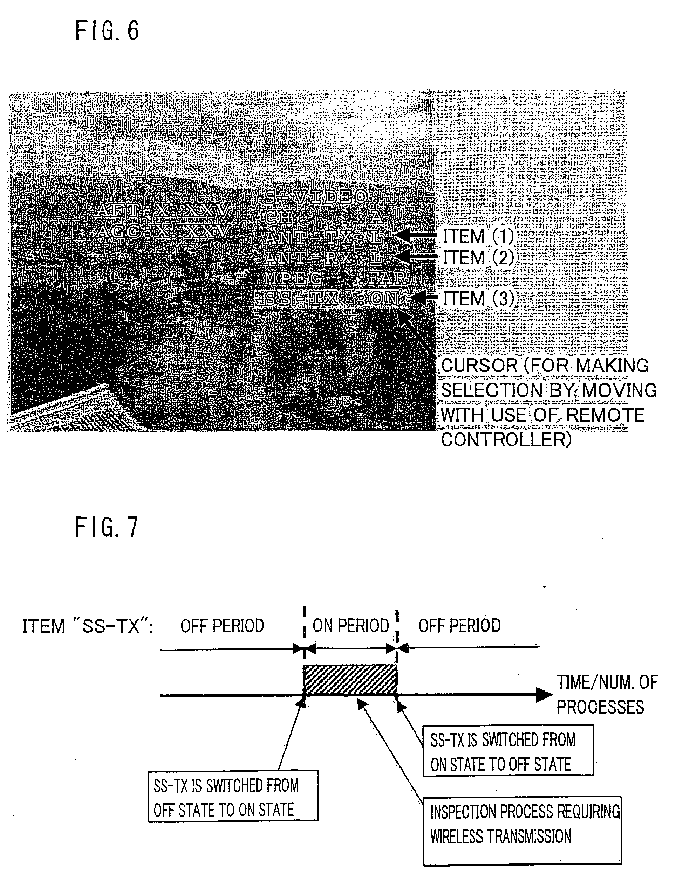

As illustrated in Fig. 7, the worker is able to cause a communications status of the antenna to enter or exit an "ON"-period, through the following process. Namely, when the wireless communications system enters an inspection mode, only a worker is able to perform adjustment with a use of the remote controller or keys of operation section arranged beforehand on the main-body (video transmitting unit 20). Meanwhile, various adjustment items as illustrated in Fig. 6 are displayed (e.g. "CH" to "SS-TX" or the like. The details are described later). Amongst these displayed items, "SS-TX" is an item which indicates a communications status of an antenna. Specifically, the indication of this item switches between "ON" and "OFF" to indicate whether or not an antenna of the video transmitting unit 20 is performing a signal transmission: i.e., whether or not a signal is transmitted from the antenna of the video transmitting unit 20. This indication of the item is switched over, along with the communications status of the antenna, by a switching operation signal or the like transmitted from the remote controller or the like.

For example, information (e.g. text information or the like of "SS-TX", "ON", and "OFF") for use in displaying each item is stored in the ROM 76 of the display unit 30. Then, with a control process performed by the microcomputer 75 based on an instruction from the remote controller, the information is read out from the ROM 76, and is displayed on the display means 72 or the like. In this way, the "ON"-period shown in Fig. 7 is started and ended.

In the present embodiment, the communications status is recognized by using communications status recognition means is realized by: (i) various letters and symbols stored in the ROM 76; and (ii) the display means 72. However, the communications status is recognized not only by displaying information on the screen of the display means, but also by, for example, using an LED provided to the video transmitting unit 20 or the display unit 30. In this case, it is possible to recognize the communications status based on how the LED is lighted up (i.e. based on: whether or not the LED is flashing; what color the LED is emitting; or the like).

Further, as illustrated in Fig. 6, the "SS-TX" which indicates the communications status of an antenna may be kept displayed as it is on the display screen during an inspection process. This makes it possible to easily confirm whether or not a video is suitably received while the communications status of the antennas is such that the communications is possible.

Then, after the inspection, the worker turns off, with the use of the remote controller 80, the signal output from the microcomputer of the video transmitting unit 20 to the wireless transmitting/receiving means 65.

As described, the video transmitting unit 20 is a transmitting device which successively receives data, and which successively transmits the received data including: wireless transmitting/ receiving means (transmitting means) 65 for transmitting the data via wireless communications; and a microcomputer (control means) 67 for (i) prohibiting, when the first instruction is received, the data transmission of the data performed by the wireless transmitting/receiving means, and (ii) permitting, when the second instruction is received, the data transmission having been prohibited.

With this configuration, the data having been successively received by the wireless transmitting/receiving means 65 is successively transmitted to the display unit 30 via the wireless communications. Further, when the microcomputer 67 receives the first signal, the microcomputer 67 prohibits the wireless transmitting/receiving means 65 from transmitting the received data. Further, when the microcomputer 67 receives the second signal, the microcomputer 67 permits the data transmission which has been prohibited.

Thus, the following is possible in a case where, for example, video transmitting units (transmitting devices) having an identical configuration are placed close to one another, as in the inspection process carried out prior to the product shipment.

Firstly, by causing a microcomputer 67 of a unit 20 to prohibit data transmission from the unit 20, in a case where another transmitting unit is performing data transmission therefrom to a display unit (hereinafter, the other display unit) paired with the other transmitting unit, it is possible to prevent the other display unit from being interfered from the unit 20.

Further, when the unit 20 performs data transmission to a display unit 30 paired with the unit 20, a microcomputer of the other video transmitting unit prohibits the data transmission from the other video transmitting unit, so that a data interference from the other video transmitting unit in the display unit 30 is prevented. In this case, if the data transmission is prohibited in the unit 20, the microcomputer 67 of the unit 20 permits the data transmission having been prohibited, so that the unit 20 is able to perform the data transmission.

Accordingly, it is possible to prevent data interference in the display unit 30 or in the other display unit (i.e., reception side device), which interference is attributed to interference of electric waves of video transmitting units.

Here, each reception side device may be provided for each transmitting device, or provided for each group of plural transmitting devices.

In the above case, only the antennas of the video transmitting units 20 are deactivated (i.e. signal output to the antennas is halt) before the inspection. However, it is possible to deactivate only the antennas of the display unit 30 which is not being inspected, or to deactivate antennas of both of the video transmitting unit 20 and the display unit 30 which are not being inspected. The present invention suggests a method in which a status of an antenna is switched to a functioning status (i.e. communications-enabled status) by using, as means for allowing communications only during an inspection, a remote controller 80 or an operation section (not shown) of a main-body (video transmitting unit 20 and/or display unit).

Here, if the above described prohibition is performed not only in the video transmitting unit 20, but also in the display unit 30 paired with the video transmitting unit 20, another display unit paired with another video transmitting unit does not receive data from the video transmitting unit 20.

Accordingly, in a circumstance, such as an inspection process, where plural pairs of video transmitting units and display units are aligned, it is possible to perform communications only between a single pair of a video transmitting unit and a display unit, even if all the video transmitting units and display units are powered on.

Further, since only a single display unit displays a video, a worker engaged in the inspection work does not confuse a display unit he/she is inspecting with other display units.

Further, when the video transmitting unit 20 is transmitting a CATV signal on a TV electric wave to the display unit 30, audio data is transmitted along with video data. In this case, audio output from display units other than the display unit the worker is currently inspecting is stopped, without a need of turning down the level of audio output from the display units not being inspected. Thus, it is possible to listen to only the audio output from the single display unit currently being inspected. Accordingly, the audio output is also checked efficiently.

The microcomputer 75 transmits the antenna selection information to the vide processing means 71, and the information is converted, by the video processing means 71, into symbols to be displayed on the display means 72. Fig. 6 is an explanatory diagram illustrating a displayed screen. In the figure, the antenna selection information is displayed in the form of text. Each of the text symbols are set as follows.

Item (1) "ANT-TX" is for selecting an antenna of the video transmitting unit 20.

Selections:
"L" ⇒ antenna 26 is designated;
"R" ⇒ antenna 27 is designated;
"D" ⇒ one of the antennas 26 and 27 is automatically selected.

Item (2) "ANT-RX" is for selecting an antenna of the display unit 30 is selected.

Selections:
"L" ⇒ antenna 41 is designated;
"R" ⇒ antenna 42 is designated;
"C" ⇒ antenna 43 is designated;
"D" ⇒ one of the antennas 41, 42 and 43 is automatically selected.

Item (3) "SS-TX" is for switching "ON"/"OFF" of signal output from the microcomputer 67 to the antennas 26 and 27 of the video transmitting unit 20.

Selections:
"ON" ⇒ the antennas 26 and 27 of video transmitting unit 20 are functioning;
"OFF" ⇒ the antennas 26 and 27 of video transmitting unit 20 are not functioning.

In the case of Fig. 6, "SS-TX" is "ON". Therefore, it is apparent that the antennas 26 and 27 of the video transmitting unit 20 subject to the inspection are functioning. Further, "ANT-TX" is "L", and "ANT-RX" is "L". This means that the antennas 26 and 41 are functioning.

Note that if the selection is "D", the antennas are selected according to an order which is determined beforehand in the microcomputers 67 and 75. Data regarding the order of antenna selection is stored in the ROMs 68 and 76, and the antennas are selected according to this data. In this case, the microcomputers of the video transmitting unit and the display unit automatically select the antennas to be functioned. This saves a labor of the worker in charge of the inspection.

As illustrated in Fig. 7, the antenna of the video transmitting unit 20 to be inspected is switched to the communications-enabled status, and an associated display unit 30 therefore displays on its display screen "SS-TX" is "ON". In this way, it is possible to prevent an interference from a video transmitting unit 20 which is not being inspected, and in which unit the communications status of the antennas is disabled (i.e. a status in which communications using the antennas is not possible). Thus, the display unit 30 is not interfered from an electric wave of the video transmitting unit 20 which is not being inspected. Accordingly, during the inspection process, a transmittance/reception inspection can be conducted without an operation for turning on/off the transmitting section (wireless communications transmitting section 25). This improves working efficiency.

Further, the setting item SS-TX, for changing over an RF output function of the transmitting section, is provided only for use in the inspection process, so that a user is not easily able to change over the RF output function. In other words, the "SS-TX" item is basically set only by a worker. This is because the setting of "SS-TX" item is not possible unless a key operation known only by the worker is performed. This prevents an operation mistake by a user.

Note that a displayed symbol representing an antenna does not have to be in the form of text, and the displayed symbol may be in the form of an icon. Alternatively, the antennas may be respectively represented by different colors.

As described, the display means 72 displays a symbol representing the antenna being functioning. Thus, in the transmittance/reception inspection, the worker is easily able to recognize whether or not the received video signal is received via a suitable antenna. Further, by superimposing the antenna symbol on a video signal being received, the worker is able to identify and confirm the antenna currently functioning, while confirming the reception status of the wireless communications system.

Further, the display unit 30 preferably displays: (i) "SS-RX: ON", if data reception performed by the wireless transmission/receiving means 79 of the display unit 30 is prohibited; and (ii) "SS-RX: OFF", if the data reception is not prohibited. By performing this displaying, it is possible to confirm the setting status, of the side of the display unit 30, regarding whether or not the reception in the display unit 30 is prohibited.

Incidentally, the display unit 30 is provided with an antenna 43. However, this antenna 43 may not be provided to the display unit 30.

Further, the above description deals with a case where the antennas 26 and 27 of the video transmitting unit 20 are arranged in different directions. However, the present invention is not limited to this. That is, the antennas 26 and 27 are not necessarily arranged in different directions.

This is also true for the display unit 30, and the antennas 41 to 43 are not necessarily arranged in different directions.

Further, as described above, the microcomputer 67 preferably receives the first and second instructions from the remote controller 80, so that the first and the second instructions can be transmitted from a distance. This improves the convenience in an operation for imputing the first and the second instructions.

Further, in the above case, the worker operates the remote controller or the like to cause the inspection mode to be started. That is, the microcomputer 67 receives the first instruction only when the microcomputer receives a predetermined instruction.

In the configuration, the data transmission is not prohibited unless the predetermined instruction is received. Therefore, only a worker who knows how to transmit the predetermined instruction to the microcomputer 67 is able to prohibit the data transmission. By not letting a user in general know how to transmit the predetermined instruction, it is possible to prevent the user from inadvertently set the mode in which data transmission is prohibited.

Further, the wireless transmitting/receiving means 65 of the video transmitting unit 20 is capable of transmitting, to the display unit 30, a signal indicating that the data transmission is prohibited by the microcomputer 67. By performing displaying operation based on the signal on the display unit 30, the user is able to visually confirm that the data transmission is prohibited.

The present invention is not limited to the embodiments above, but may be altered within the scope of the claims. An embodiment based on a proper combination of technical means disclosed in different embodiments is encompassed in the technical scope of the present invention.

The above described control means is realized by causing calculation means such as a CPU in the microcomputer 67 to execute a program stored in storage means such as an ROM (Read Only Memory; e.g. ROM 68) and an RAM (RAM(s) inside and/or outside the microcomputer) for controlling input means such as a keyboard, output means such as a display, and communications means such as an interface circuit. Accordingly, the functions and processes of the video transmitting unit of the present invention are realized simply by reading out and executing the program stored in a storage medium with a use of a computer having these means. Further, by storing the program in a removable storage medium, the above described functions and processes are realized on an arbitrary computer. This is also true for the display unit.

Such a computer program storage medium may be a memory (not shown), such as a ROM, so that the process is executable on a microcomputer. Alternatively, a program medium may be used which can be read by inserting the storage medium in an external storage device (program reader device; not shown).

In addition, in either of the cases, it is preferable if the contained program is accessible to a microprocessor which will execute the program. Further, it is preferable if the program is read, and the program is then downloaded to a program storage area of a microcomputer where the program is executed. Assume that the program for download is stored in a main body device in advance.

In addition, the program medium is a storage medium arranged so that it can be separated from the main body. Examples of such a program medium include a tape, such as a magnetic tape and a cassette tape; a magnetic disk, such as a flexible disk and a hard disk; a disc, such as a CD/MO/MD/DVD; a card, such as an IC card (inclusive of a memory card); and a semiconductor memory, such as a mask ROM, an EPROM (erasable programmable read only memory), an EEPROM (electrically erasable programmable read only memory), or a flash ROM. All these storage media hold a program in a fixed manner.

Alternatively, if a system can be constructed which can connects to the Internet or other communications network, it is preferable if the program medium is a storage medium carrying the program in a flowing manner as in the downloading of a program over the communications network.

Further, when the program is downloaded over a communications network in this manner, it is preferable if the program for download is stored in a main body device in advance or installed from another storage medium.

As described, a transmitting device of the present invention is a transmitting device which successively receives data, and which successively transmits the received data, comprising: transmitting means for performing data transmission via wireless communications; and control means for (i) prohibiting, when a first instruction is received, the data transmission of the received data performed by the transmitting means, and (ii) permitting, when a second instruction is received, the data transmission having been prohibited.

Further, the transmitting device of the present invention is adapted so that said control means receives the first and second instructions from a remote control device.

In the configuration, the control means receives the first and the second instructions from the remote control device. Therefore, it is possible to transmit from a distance the first and the second instructions. This improves convenience in an input operation of the first and the second instructions.

Further, the transmitting device of the present invention is adapted so that said control means receives said first instruction only when a predetermined instruction is received.

In the configuration, the control mean receives the first instruction, only when the predetermine instruction is received. In short, the data transmission is not prohibited unless the predetermined instruction is not received. Accordingly, the data transmission is prohibited only by a person in charge of inspection or the like, who knows how to transmit the predetermined instruction to the control means. Thus, by not letting a user in general know how to transmit the predetermined instruction, it is possible to prevent the user from inadvertently set the mode which prohibits data transmission.

Further, the transmitting device of the present invention is adapted so that said transmitting means further transmits a signal indicating that the data transmission of the received data is prohibited.

In the configuration, the signal indicating that the data transmission of the received data is prohibited is transmitted from the transmitting device to a reception side device. Then, by performing a displaying operation based on the signal in the reception side device, a user is able to visually confirm that the data transmission is prohibited.

Further, a wireless communications system of the present invention is a wireless communications system including: the above-described transmitting device; and a receiving device for receiving the data transmitted from the transmitting device.

Further, the wireless communications system of the present invention is adapted so that the transmitting means of said transmitting means further transmits a signal indicating that the data transmission of the received data is prohibited; and said receiving device includes display means for performing display based on the signal.

In the configuration, the signal indicating that the data transmission of the received data is prohibited is transmitted to the receiving device by using the transmitting means of the transmitting device. Further, with the use of the display means of the receiving device, it is possible to perform a displaying operation based on the signal.

A user is able to visually confirm, via the receiving device, that the data transmission is prohibited.

Further, a wireless communications system of the present invention is a wireless communications system having a pair of a transmitting device and a receiving device each having an antenna, said system comprising: operation means for enabling modification of various settings of said wireless communications system; and operation signal receiving means for receiving an operation signal which is an instruction from the operation means, wherein said operation means generates a switching operation signal for a purpose of switching a communications status of the antenna of at least one of said transmitting device and receiving device, between a communications-enabled status and a communications-disabled status, and said transmitting or receiving device includes control means for controlling the antenna to be the communications-enabled status or communications-disabled status, when the switching operation signal is received via the operation signal receiving means.

Further, the wireless communications system of the present invention further includes communications status recognition means for allowing recognition of whether or not said communications status of the antenna is in the communications-enabled status or in the communications-disabled status.

Further, the wireless communications system of the present invention is adapted so that said receiving device includes (i) display means for performing a displaying operation based on a video signal received from the transmitting device, or the operation signal received from the operation means, and (ii) storage means for storing communications status information for use in indicating the communications status on the display means; and when a predetermined operation signal is received via the operation signal receiving means, said communications status recognition means is realized by performing a control operation so that the display means displays the communications status information having read out from the storage means, the communications status information corresponding to the communications status of the antenna.

Further, the wireless communications system of the present invention is adapted so that said storage means stores therein, in addition to the communications status information, information for use in displaying an item or a symbol related to the antenna; and when the predetermined operation signal is received via the operation signal receiving means, the item or the symbol related to the antenna is displayed, along with the communications status information, by superimposing the item or the symbol on the video signal being received.

Further, the wireless communications system of the present invention is adapted so that said operation means is operable only in an inspection process.

In the configuration, the switching operation means is used only in the inspection process. More specifically, the setting item "SS-TX", for changing over an RF output function of the transmitting section, is provided only for use in the inspection process, so that a user is not easily able to change over the RF output function. This prevents an operation mistake by a user.

Further, the display means displays an item or a symbol indicating the antenna, a letter or a symbol indicating whether or not signal input/output of the antennas is "ON". This allows a person in charge of adjustment to easily confirm that an image displayed on the display section based on a video data is not interfered, while he/she is conducting transmission/reception inspection in an inspection process.

Further, the antenna symbol is displayed by superimposing the symbol on a video signal being received. Therefore, the worker is able to identify and confirm the antenna currently functioning, while confirming the reception status of the wireless communications system.

Further, in order to solve the foregoing problem, a program of the present invention is a program for causing a computer to function as the control means of the above-described transmitting means.

Further, in order to solve the foregoing problem, a storage medium of the present invention is a computer-readable storage medium storing therein the above-described program.

### INDUSTRIAL APPLICABILITY

A transmitting side device of the present invention is applicable to a device such as: a mobile phone; PDA (Personal Digital Assistant); DVD player; DVD recorder; and a personal computer. Further, a reception side device of the present invention is applicable to a device having a display means, such as: a mobile phone; PDA; DVD player; DVD recorder; and a personal computer. The reception side device is further applicable to so-called home-use electric appliance such as microwave oven and refrigerator, provided that the home-use electric appliance includes the display means.

## Claims

1. A transmitting device which successively receives data, and which successively transmits the received data, comprising:
transmitting means for performing data transmission via wireless communications; and
control means for (i) prohibiting, when a first instruction is received, the data transmission of the received data performed by the transmitting means, and (ii) permitting, when a second instruction is received, the data transmission having been prohibited.

2. The transmitting device as set forth in claim 1, wherein
said control means receives the first and second instructions from a remote control device.

3. The transmitting device as set forth in claim 1 or 2, wherein
said control means receives said first instruction only when a predetermined instruction is received.

4. The transmitting device as set forth in any one of claims 1 to 3, wherein
said transmitting means further transmits a signal indicating that the data transmission of the received data is prohibited.

5. A wireless communications system comprising:
said transmitting device set forth in any one of claims 1 to 4; and
a receiving device for receiving the data transmitted from the transmitting device.

6. The system as set forth in claim 5, wherein:
the transmitting means of said transmitting means further transmits a signal indicating that the data transmission of the received data is prohibited; and
said receiving device includes display means for performing display based on the signal.

7. A wireless communications system having a pair of a transmitting device and a receiving device each having an antenna, said system comprising:
operation means for enabling modification of various settings of said wireless communications system; and
operation signal receiving means for receiving an operation signal which is an instruction from the operation means, wherein
said operation means generates a switching operation signal for a purpose of switching a communications status of the antenna of at least one of said transmitting device and receiving device, between a communications-enabled status and a communications-disabled status, and
said transmitting or receiving device includes control means for controlling the antenna to be the communications-enabled status or communications-disabled status, when the switching operation signal is received via the operation signal receiving means.

8. The wireless communications system as set forth in claim 7, further comprising:
communications status recognition means for allowing recognition of whether or not said communications status of the antenna is in the communications-enabled status or in the communications-disabled status.

9. The wireless communications system as set forth in claim 7 or 8, wherein:
said receiving device includes (i) display means for performing a displaying operation based on a video signal received from the transmitting device, or the operation signal received from the operation means, and (ii) storage means for storing communications status information for use in indicating the communications status on the display means; and
when a predetermined operation signal is received via the operation signal receiving means, said communications status recognition means is realized by performing a control operation so that the display means displays the communications status information having read out from the storage means, the communications status information corresponding to the communications status of the antenna.

10. The wireless communications system as set forth in claim 9, wherein:
said storage means stores therein, in addition to the communications status information, information for use in displaying an item or a symbol related to the antenna; and
when the predetermined operation signal is received via the operation signal receiving means, the item or the symbol related to the antenna is displayed, along with the communications status information, by superimposing the item or the symbol on the video signal being received.

11. The wireless communications system as set forth in any one of claims 7 to 10, wherein
said operation means is operable only in an inspection process.

12. A program for causing a computer to function as the control means of said transmitting means set forth in any one of claims 1 to 4.

13. A computer-readable storage medium storing therein said program set forth in claim 12.
